(19) Europäisches Patentamt
European Patent Office
Office européen des brevets

(11) **EP 4 430 367 B1**

(12) **EUROPÄISCHE PATENTSCHRIFT**

(45) Veröffentlichungstag und Bekanntmachung des Hinweises auf die Patenterteilung:
**01.07.2026  Patentblatt 2026/27**

(21) Anmeldenummer: **22797689.1**

(22) Anmeldetag: **27.09.2022**

(51) Internationale Patentklassifikation (IPC):
***G01F 23/296*** *(2022.01)*

(52) Gemeinsame Patentklassifikation (CPC):
**G01F 23/296**

(86) Internationale Anmeldenummer:
**PCT/EP2022/076765**

(87) Internationale Veröffentlichungsnummer:
**WO 2023/083520 (19.05.2023 Gazette 2023/20)**

(54) **ZUSTANDSÜBERWACHUNG FÜR EINEN VIBRONISCHEN SENSOR**

CONDITION MONITORING FOR A VIBRONIC SENSOR

SURVEILLANCE DE L'ÉTAT POUR UN CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2021  DE 102021129416**

(43) Veröffentlichungstag der Anmeldung:
**18.09.2024  Patentblatt 2024/38**

(73) Patentinhaber: **Endress+Hauser SE+Co. KG
79689 Maulburg (DE)**

(72) Erfinder: **D'ANGELICO, Sascha
79595 Rümmingen (DE)**

(74) Vertreter: **Endress + Hauser Group Services (Deutschland) AG+Co. KG
Colmarer Straße 6
79576 Weil am Rhein (DE)**

(56) Entgegenhaltungen:
| | |
|---|---|
| EP-A2- 1 624 291 | WO-A1-2016/091479 |
| WO-A2-2006/042786 | DE-A1- 102017 111 392 |
| DE-B4- 102015 121 621 | |

## Beschreibung

Die Erfindung betrifft ein Verfahren zur Zustandsüberwachung eines vibronischen Sensors mit den Merkmalen des Oberbegriffs des ersten Anspruchs.

Ein gattungsgemäßes Verfahren zur Zustandsüberwachung mit einer Filterung der Signale offenbart die DE 10 2015 121 621 B4.

Vibronische Sensoren finden vielfach Verwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind im Stand der Technik unterschiedlichste Lösungen verfügbar, wie beispielsweise in DE102006034105A1, DE102007013557A1, DE102005015547A1, DE102009026685A1, DE102009028022A1, DE102010030982A1 oder DE00102010030982A1 offenbart. Weitere mögliche Anregungsmethoden sind beispielsweise in DE102012102589A1 oder DE102016111134A1 beschrieben.

Sowohl das Anregesignal als auch das Empfangssignal sind charakterisiert durch ihre Frequenz $\omega$, Amplitude A und/oder Phase $\Phi$. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Wie beispielweise in der DE10050299A1 beschrieben, kann die Viskosität eines Mediums mittels eines vibronischen Sensors anhand der Frequenz-Phase-Kurve ($\Phi = g(\omega)$) bestimmt werden. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermitteln und entsprechend zu kompensieren. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Dabei wird die Dichte im Wesentlichen nach der Formel

$$\rho_{Med} = \frac{1}{K}\left[\left(\frac{f_{0,Vak}+C\cdot t+A\cdot t^2}{f_{T,P,Med}}\right)^2 \cdot \left(1+D\cdot p\right)-1\right]$$

bestimmt, wobei K die Dichteempfindlichkeit der mechanisch schwingfähigen Einheit ist, $F_{0,vak}$ die Frequenz der mechanischen Schwingungen im Vakuum, C und A der lineare bzw. quadratische Temperaturkoeffizient der mechanisch schwingfähigen Einheit, t die Prozesstemperatur, $F_{T,P,,med}$ die Frequenz der mechanischen Schwingungen im Medium, D der Druckkoeffizient und p der Druck des Mediums.

Um unabhängig von empirischen Annahmen zu sein, ist aus der DE102015102834A1 ein analytisches Messprinzip zur Bestimmung der Dichte und/oder Viskosität mittels eines vibronischen Sensor bekannt geworden, die Interaktionen zwischen der schwingfähigen Einheit und dem Medium anhand eines mathematischen Modells berücksichtigt. Der Sensor wird bei zwei verschiedenen vorgebbaren Phasenverschiebungen betrieben und aus dem jeweiligen Antwortsignal die Prozessgrößen Dichte und/oder Viskosität ermittelt.

Unabhängig davon, welche Prozessgröße mittels eines vibronischen Sensors bestimmt und/oder überwacht wird, können verschiedene Störeinflüsse die Messgenauigkeit des jeweiligen Sensors negativ beeinflussen. Problematisch sind insbesondere sogenannte Fremdvibrationen, welche beispielsweise durch Pumpen und/oder Ultraschallbäder am Einsatzort des Sensors verursacht werden können. In dieser Hinsicht ist aus der Offenlegungsschrift DE102012101667A1 ein vibronischer Sensor bekannt geworden, bei welchem eine Regel-/Auswerteeinheit dazu konfiguriert ist, bei Vorliegen mindestens einer Fremdvibration in Abhängigkeit der Frequenz und/oder der Amplitude der Fremdvibration die Schwingungsanregung derart zu steuern, dass das Empfangssignal von der Fremdvibration im Wesentlich ungestört ist, und/oder mindestens eine Frequenz einer Fremdvibration in dem Empfangssignal zu unterdrücken. Hierzu ist aber im Prinzip Kenntnis über die jeweils auftretenden Fremdvibrationen erforderlich. Aus DE102016124740A1 wiederum ist ein Verfahren bekannt, bei welchem in einem ersten Betriebsmodus eine Anregung des vibronischen Sensors zu mechanischen Schwingungen vorgenommen und in einem zweiten Betriebsmodus das Empfangssignal ohne Schwingungserregung empfangen wird. Anhand der Frequenz des Empfangssignals im zweiten Betriebsmodus kann ein externer Störeinfluss für den vibronischen Sensor ermittelt werden. Auch hier kann es aber beliebig schwierig werden, verschiedene Störeinflüsse voneinander zu unterscheiden und eine umfassende Eliminierung der Störeinflüsse auf die eigentliche Messung vorzunehmen. Aus der DE102015121621B4 ist wiederum eine Sensordiagnose anhand eines Spektrums des Sensors bekannt geworden. Für das Ermitteln einer Aussage über den Zustand des Sensors müssen jedoch spezielle und spezifische Kriterien aufgestellt werden, so dass eine Diagnose des Sensors losgelöst von Einflüssen durch verschiedene Umgebungsparameter in der Regel nicht möglich ist. Die Auswertung von Spektren ist nämlich in Summe in vielen Anwendungsfällen beliebig komplex.

Eine Selbstdiagnose für einen vibronischen Sensor wird in der EP 1 624 291 A2 beschrieben, wobei als ein Beispiel für die Auswertung von Messwerten neuronale Netze genannt werden.

Ein Verfahren zur Zustandsüberwachung offenbart die DE 10 2017 111 392 A1, wobei ein Frequenzspektrum der Schwingungen des Sensors ausgewertet wird.

Daher liegt der vorliegenden Erfindung die Aufgabe zugrunde, eine möglichst umfassende zuverlässige Zustandsüberwachung eines vibronischen Sensors bereitzustellen.

Diese Aufgabe wird gelöst durch das Verfahren nach Anspruch 1.

Während aus dem Stand der Technik verschiedenste Verfahren bekannt geworden sind, mittels welcher Diagnosen von Sensoren, insbesondere auch vibronischer Sensoren, möglich sind, ist eine genaue Zustandsüberwachung der Sensoreinheit und/oder Antriebs-/Empfangseinheit nur sehr eingeschränkt möglich und teilweise sehr komplex. In einem Spektrum des vibronischen Sensors sind grundsätzlich alle Informationen über die mechanischen Schwingungen, die Wechselwirkung mit verschiedenen Umgebungsbedingungen, die elektromechanische Wandlung mittels der Antriebs-/Empfangseinheit, oder auch äußere Einflüsse auf den Sensor und verschiedene Sensorparameter enthalten. Allerdings ist die Auswertung der Spektren typischerweise jedoch beliebig kompliziert.

Mittels des neuronalen Netzwerks zur Zustandsüberwachung des vibronischen Sensors kann die Interpretation von Spektren des vibronischen Sensors erheblich verbessert und vereinfacht werden. So beinhalten die gemessenen Spektren beispielsweise verschiedenste äußere und innere Störeinflüsse, welche von der eigentlichen Messinformation mit herkömmlichen Mitteln kaum unterschieden werden können. Mittels des erfindungsgemäßen Verfahrens können dagegen auch komplexe Muster in den gemessenen Spektren zuverlässig erkannt werden.

Ein Vorteil des erfindungsgemäßen Verfahrens ist auch darin zu sehen, dass eine umfassende Zustandsüberwachung des Sensors möglich wird, ohne dass der Sensor aus dem jeweiligen Prozess, für welchen er eingesetzt wird, ausgebaut werden muss.

Vorzugsweise umfasst das neuronale Netzwerk zwei oder mehr Ausgangsneuronen, wobei die Anzahl der Ausgangsneuronen ein Maß für die Anzahl der unterschiedlichen Kategorien bzw. der vornehmbaren Klassifizierungen ist.

Beispielsweise kann ein bereits trainiertes neuronales Netzwerk verwendet werden, welches vorzugsweise in einem überwachten (engl. supervised) oder semiüberwachten (engl. semisupervised) Lernprozess trainiert wurde. Störeinflüsse auf die Messung mittels des vibronischen Sensors müssen demnach nicht a priori bekannt sein, sondern können anhand des erfindungsgemäßen Verfahrens, insbesondere auch im fortlaufenden Betrieb des Sensors, ermittelt werden.

Zudem ist es möglich, dass anhand der Aussage über den Zustand des Sensors eine Zustandsüberwachung bzw. Diagnose des Sensors durchgeführt werden, oder dass der Einfluss zumindest einer ermittelten Störung des regulären Messbetriebs geeignet kompensiert, insbesondere rechnerisch kompensiert, wird. Beispielsweise kann anhand des Verfahrens das Schwingungsverhalten des Sensors analysiert werden.

Das erfindungsgemäße Verfahren kann zu vorgebbaren Zeitpunkten oder singulär auf Bedarf durchgeführt werden. Auch eine periodische Durchführung des Verfahrens in vorgebbaren Zeitintervallen ist denkbar. So kann die erfindungsgemäße Sensordiagnose als wiederkehrende Prüfung oder als kontinuierliche Überwachung neben dem normalen Messprozess durchgeführt werden.

In einer Ausgestaltung des Verfahrens handelt es sich bei dem zumindest einen Spektrum um ein Frequenzspektrum, insbesondere einer Amplitude oder Phase, des Empfangssignals, beispielsweise als Funktion einer Anregefrequenz des Anregesignals.

Vorzugsweise handelt es sich der zumindest einen Aussage über den Zustand des vibronischen Sensors über eine Aussage über die Funktionsfähigkeit des Sensors. Es kann aber auch eine detaillierte Zustandsüberwachung des Sensors hinsichtlich unterschiedlicher Einflussgrößen für das gemessene Spektrum vorgenommen werden. Insbesondere können reguläre und irreguläre Einflussgrößen unterschieden werden. Reguläre Einflussgrößen sind solche Einflüsse, welche auf die Umgebungsbedingungen und den jeweiligen spezifischen Prozess, in welchem der Sensor verwendet wird, zurückgehen. Irreguläre oder fehlerbedingte Einflüsse auf den Zustand des Sensors, wie beispielsweise Defekte am Sensor oder applikationsbedingte Veränderungen, insbesondere Ansatz oder Korrosion im Bereich der Sensoreinheit, dagegen können zur Funktionsbeeinträchtigung oder sogar zum Ausfall des jeweiligen Sensors führen.

So handelt es sich in einer Ausgestaltung bei der Aussage über den Zustand des vibronischen Sensors beispielsweise um eine Aussage über den Zustand der Sensoreinheit, insbesondere einen Ansatz oder eine Korrosion im Bereich der Sensoreinheit, einen Bedeckungsgrad, eine Dämpfung, eine Messempfindlichkeit der schwingfähigen Einheit, oder eine mechanische Beschädigung der schwingfähigen Einheit, beispielsweise eine Verbiegung zumindest eines Schwingelements. Bei der Aussage über den Zustand des vibronischen Sensors kann es sich aber auch um eine Aussage über zumindest einen Umgebungsparameter oder eine Änderung zumindest eines Umgebungsparameters, wie beispielsweise einer Dichte, Viskosität, Temperatur oder eines Drucks des Mediums, oder um eine Aussage über die Antriebs-/Empfangseinheit, insbesondere e in Bezug auf ein piezoelektrisches Element, zum Beispiel ein Bruch in dem piezoelektrischen Element, und/oder eine Klebestelle, eine Aussage über Vibrationen, insbesondere Fremdvibrationen, in einer Umgebung des Sensors, oder eine Aussage über eine elektrische Kontaktierung im Bereich des Sensors, wie beispielsweise ein Kabelbruch, Kurzschluss, oder ein elektrischer Defekt, handeln.

Im Falle, dass das Netzwerk zur Diagnose des Sensors hinsichtlich verschiedener das Spektrum beeinflussenden Größen ausgestaltet ist, und bei denen das neuronale Netzwerk mehr als zwei Ausgangsneuronen umfasst, können verschiedene, miteinander in Beziehung stehende Einflussgrößen auch geeignet gruppiert werden, um die Anzahl notwendiger Ausgangsneuronen so klein wie möglich zu belassen.

In einer weiteren Ausgestaltung des erfindungsgemäßen Verfahrens handelt es sich bei dem neuronalen Netzwerk um ein mehrschichtiges neuronales Netzwerk (engl. deep neural network). Das Netzwerk umfasst also zumindest zwei Lagen (engl. layer), wobei die Anzahl der Lagen und/oder die Anzahl von Neuronen pro Lage vorzugsweise mit der Komplexität des Spektrums, insbesondere mit der Komplexität des zu erkennenden Musters, und der Anzahl der das Spektrum beeinflussenden Einflussgrößen korreliert.

Erfindungsgemäß werden die Eingangsdaten einem Datenvorverarbeitungs-Modul zugeführt, welches zumindest einen Filter zur Filterung der Eingangsdaten hinsichtlich zumindest einer Information umfasst, und wobei dem neuronalen Netzwerk zumindest teilweise die gefilterten Eingangsdaten zur Verfügung gestellt werden. Das Datenvorverarbeitungs-Modul dient damit im Prinzip der Informationsverdichtung, beispielsweise um eine Anzahl an benötigten Input-Neuronen des neuronalen Netzwerks zur Zustandsüberwachung des vibronischen Sensors zu reduzieren.

Es ist einerseits denkbar, dass es sich bei dem Filter um eine herkömmliche Filterfunktion handelt. Es ist aber ebenfalls von Vorteil, wenn das Datenvorverarbeitungs-Modul ein neuronales Netzwerk zur Datenvorverarbeitung, insbesondere ein faltendes neuronales Netzwerk (eng. Convolutional neural network (CNN)), umfasst. Dieses neuronale Netzwerk zur Datenvorverarbeitung des Datenvorverarbeitungs-Moduls kann auch Teil des neuronalen Netzwerkes zur Zustandsüberwachung des vibronischen Sensors sein, insbesondere kann es dem Netzwerk zur Zustandsüberwachung des vibronischen Sensors vorgeschaltet sein.

In Bezug auf das Datenvorverarbeitungs-Moduls ist es ferner von Vorteil, wenn das Datenvorverarbeitungs-Modul dazu ausgestaltet ist, zumindest einen Resonanzpeak, insbesondere eine Peak-Höhe, eine Peak-Güte, oder eine Frequenz, eine Anzahl an Resonanzpeaks innerhalb eines Spektrums, eine Phasensteilheit in dem Spektrum, einen Phasensprung in dem Spektrum, oder ein Hintergrundsignal des Spektrums, zu ermitteln. So können einzelne Peaks mit speziellen Eigenschaften herausgefiltert werden. Derartige mittels des Datenvorverarbeitungs-Moduls ermittelte Größen oder Informationen können auch zusätzlich dem neuronalen Netzwerk zur Zustandsüberwachung des Sensors zur Verfügung gestellt werden.

Grundsätzlich können aber auch andere charakteristische mit dem Spektrum in Verbindung stehende Größen oder Charakteristika für das jeweilige Spektrum ermittelt werden. Dabei unterscheiden sich die jeweils geeigneten Größen in Abhängigkeit des verwendeten Spektrums, z.B. je nachdem ob ein Amplituden- oder Phasenspektrum verwendet wird.

Erfindungsgemäß ist das Netzwerk dazu ausgestaltet, zumindest anhand der Eingangsdaten eine vorausschauende Wartung des vibronischen Sensors durchzuführen. Dafür handelt sich bei dem neuronalen Netzwerk um ein rekurrentes neuronales Netzwerk. Bei diesem Netzwerk zur Zustandsüberwachung des vibronischen Sensors erfolgt eine Rückkopplung, welche zur Ermittlung eines Zustands des Sensors in der Vergangenheit bzw. zum Vergleich mit einem Zustand des Sensors aus der Vergangenheit dient. Es wird somit eine Gedächtnisfunktion bereitgestellt.

Es ist ferner von Vorteil, wenn zumindest eine Information aus dem Spektrum und/oder eine Aussage über den Zustand des Sensors als Funktion der Zeit aufgezeichnet wird/werden. Es kann aber auch eine Information, welche mittels des Datenvorverarbeitungs-Moduls ermittelt wird, aufgezeichnet werden. Dadurch kann eine Approximation möglicher Veränderungen in der Zukunft durchgeführt werden. Zudem ist es möglich eine Aussage darüber zu generieren, wie lange der Sensor bei im Wesentlichen konstanten Bedingungen oder gleichbleibenden Änderungsraten für bestimmte Einflussgrößen funktionsfähig bleibt.

Erfindungsgemäß ist das neuronale Netzwerk dazu ausgestaltet, zumindest anhand der Eingangsdaten einen, insbesondere vorgebbaren, Füllstand eines Mediums in einem Behältnis zu ermitteln. Neben der Zustandsüberwachung wird mittels des erfindungsgemäßen Verfahrens zusätzlich der Füllstand des Mediums in einem Behältnis, beispielsweise einer Rohrleitung oder einem Behälter, in einer herkömmlichen Art und Weise bestimmt.

Der vibronische Sensor wird beispielsweise zu mechanischen Schwingungen mit einer Resonanzfrequenz angeregt. Neben einem Füllstand eines Mediums können mit dem vibronischen Sensor auch weitere Prozessgrößen des Mediums ermittelt werden, wie beispielsweise die Dichte des Mediums und/oder die Viskosität des Mediums.

Die Erfindung sowie vorteilhafte Ausgestaltungen werden nachfolgend anhand der Figuren Fig. 1 bis Fig. 6 näher beschrieben. Es zeigt:

Fig. 1: eine schematische Skizze eines vibronischen Sensors gemäß Stand der Technik,

Fig. 2: eine schematische Zeichnung einer schwingfähigen Einheit in Form einer Schwinggabel,

Fig. 3 ein Amplitudenspektrum eines vibronischen Sensors als Funktion der Anregefrequenz und die verschiedenen Schwingungsmoden der schwingfähigen Einheit in Form einer Schwinggabel,

Fig. 4 beispielhafte Amplitudenspektren eines funktionsfähigen vibronischen Sensors in unterschiedlichen Medien,

Fig. 5 beispielhafte Amplitudenspektren eines funktionsfähigen und beschädigten vibronischen Sensors, teilweise auch in unterschiedlichen Medien, und

Fig. 6 illustriert das erfindungsgemäße Verfahren.

Gleiche Elemente sind in den Figuren mit gleichen Bezugszeichen versehen.

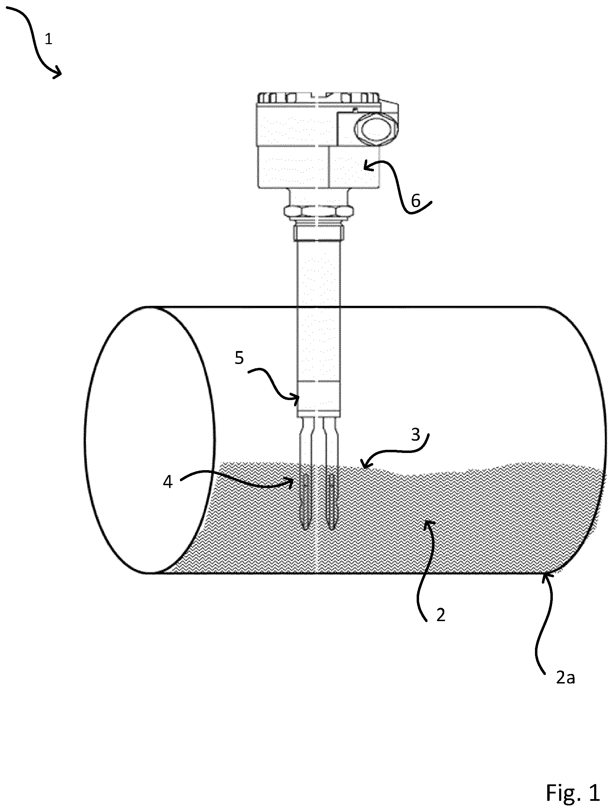

In Fig. 1 ist ein vibronischer Sensor 1 mit einer Sensoreinheit 3 umfassend eine schwingfähige Einheit 4 in Form einer Schwinggabel gezeigt, welche teilweise in ein Medium 2 eintaucht, welches sich in einem Behälter 2a befindet. Die schwingfähige Einheit wird mittels der Antriebs-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

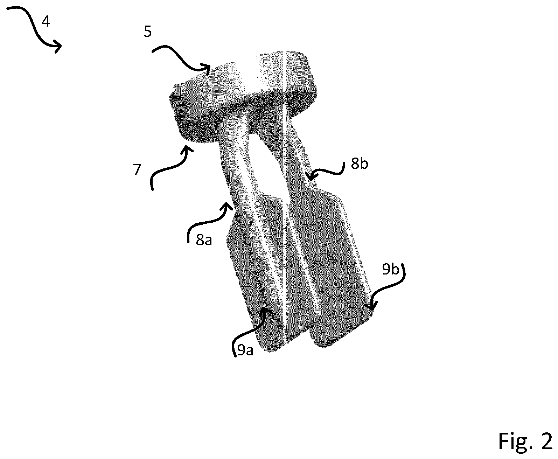

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, in einer Seitenansicht gezeigt. Die Schwinggabel 4 umfasst zwei an eine Membran 7 angeformte Schwingstäbe 8a,8b, an welche endseitig zwei Paddel 9a,9b angeformt sind. Die Schwingstäbe 8a,8b zusammen mit den Paddeln 9a,9b werden häufig auch als Gabelzinken bezeichnet. Um die mechanisch schwingfähige Einheit 4 in mechanische Schwingungen zu versetzen, wird mittels einer auf der den Schwingstäben 8a,8b abgewandten Seite der Membran 7 stoffschlüssig angebrachten Antriebs-/Empfangseinheit 5 eine Kraft auf die Membran 7 aufgeprägt. Die Antriebs-/Empfangseinheit 5 ist eine elektromechanische Wandlereinheit, und umfasst beispielsweise ein piezoelektrisches Element, oder auch einen elektromagnetischen Antrieb [nicht gezeigt]. Entweder sind die Antriebseinheit 5 und die Empfangseinheit als zwei separate Einheiten aufgebaut, oder als kombinierte Antriebs-/Empfangseinheit. Im Falle, dass die Antriebs-/Empfangseinheit 5 ein piezoelektrisches Element umfasst, wird die der Membran 7 aufgeprägte Kraft über das Anlegen eines Anregesignals $U_A$, beispielsweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal $U_A$ zu einer Schwingung der stoffschlüssig mit der Antriebs-/Empfangseinheit 5 verbundenen Membran 7 hervorruft. Umgekehrt werden die mechanischen Schwingungen der schwingfähigen Einheit über die Membran an die Antriebs-/Empfangseinheit 5 übertragen und in ein elektrisches Empfangssignal $U_e$ umgewandelt. Die Frequenz des Empfangssignals $U_e$ entspricht dabei der mechanischen Schwingungsfrequenz f der schwingfähigen Einheit 4.

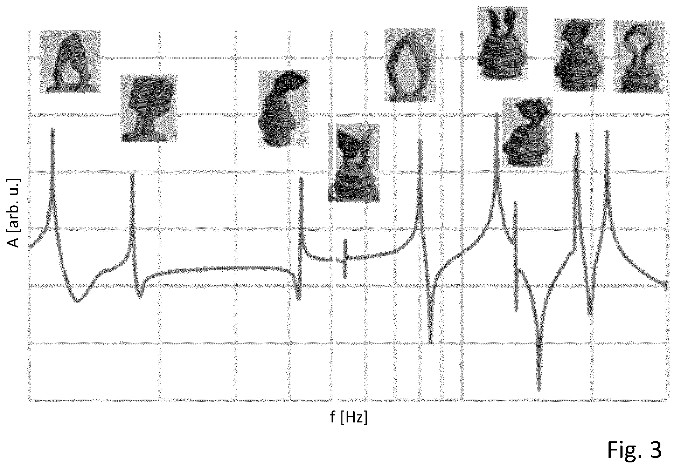

In Fig. 3 ist beispielhaft ein Amplitudenspektrum A(f) eines vibronischen Sensors 1 als Funktion der Anregefrequenz f zusammen mit den verschiedenen Schwingungsmoden der schwingfähigen Einheit 4 in den unterschiedlichen Schwingungsmoden gezeigt. Jede einzelne Schwingungsmode ist durch eine spezifische Resonanzfrequenz, eine Phase und einen spezifischen Wert für eine innere Dämpfung der schwingfähigen Einheit 4 charakterisiert und zeigt eine unterschiedliche Reaktion auf unterschiedliche äußere Einflussgrößen wie eine Bedeckung oder auch Temperatur-, Dichte, oder Viskositätsschwankungen. Außerdem ist es typischerweise nicht möglich, eine Einflussgröße einer bestimmten Schwingungsmode zuzuordnen. Hinzu kommen Unterschiede aufgrund nicht vermeidbarer fertigungsbedingter Toleranzen bezüglich verschiedener Sensoren 1.

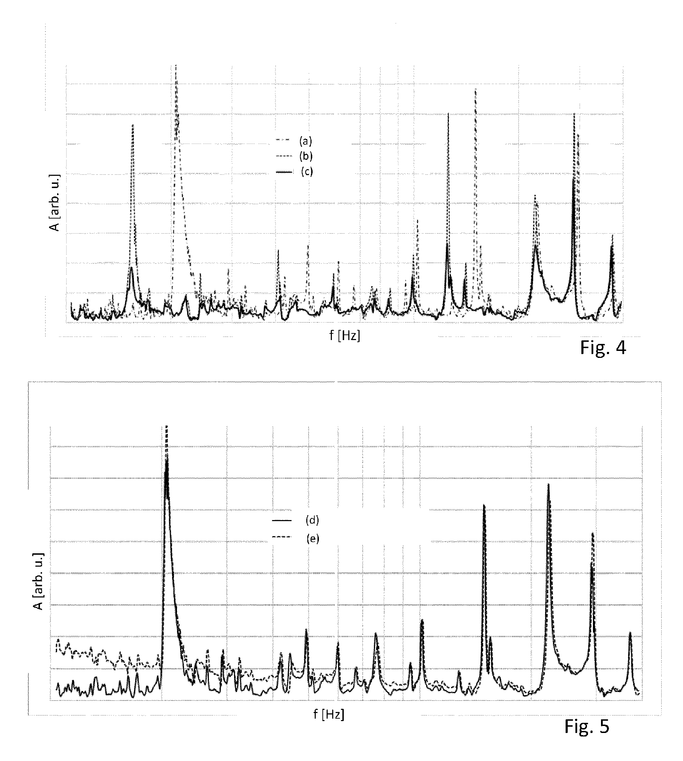

Eine Unterscheidung zwischen den teilweise nicht bekannten, regulären Einflussgrößen und irregulären Einflussgrößen, wie beispielsweise Ansatz, Korrosionen, oder mechanische oder elektrische Defekte im Bereich der Sensoreinheit oder Antriebs-/Empfangseinheit ist häufig nicht möglich. Zur Illustrierung dieser Probleme sind in Fig. 4 drei Amplitudenspektren eines funktionsfähigen Sensors 1 in drei unterschiedlichen Medien, Luft (a), Wasser (b) und eine viskose Flüssigkeit (c), dargestellt. Die Spektren unterscheiden sich deutlich voneinander. Diese Komplexität bezüglich der Auswertung von Spektren wird noch deutlicher durch Vergleich mit den in Fig. 5 gezeigten Spektren eines funktionsfähigen (d) und eines nicht funktionsfähigen (e) Sensors 1, jeweils an Luft.

Es sei darauf verwiesen, dass die gleichen bzw. ähnliche Komplikationen für den Fall, dass es sich bei dem Spektrum um ein Phasenspektrum handelt, vorhanden sind, und dass die hier getätigten Überlegungen mutatis mutandis auch für andere Spektren eines vibronischen Sensors verwendbar sind.

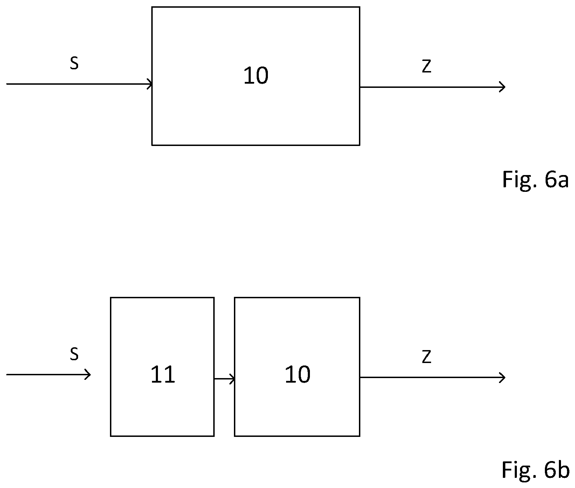

Mittels der vorliegenden Erfindung kann eine umfassende Zustandsüberwachung anhand eines neuronalen Netzwerks 10 durchgeführt werden, wie in Fig. 6 illustriert. Auf diese Weise sind die komplexen Muster und Zusammenhänge in unterschiedlichen Spektren erfassbar und auswertbar. Bei der in Fig. 6a gezeigten Ausgestaltung wird einem neuronalen Netzwerk zur Zustandsüberwachung des Sensors 1 zumindest ein Spektrum S des Sensors 1 als Eingangsdaten zur Verfügung gestellt. Das Netzwerk 10 ermittelt eine Aussage Z über den Zustand des Sensors 1 und gibt diese Aussage Z aus. Auch wenn hier nur eine Aussage Z als Output des neuronalen Netzwerks 10 illustriert wurde, können auch zwei oder mehr Ausgangsneuronen für unterschiedliche Klassifizierungen des Zustands des Sensors bereitgestellt werden.

Bei der in Fig. 6b dargestellten Ausgestaltung des erfindungsgemäßen Verfahrens ist zudem ein Datenvorverarbeitungs-Modul 11 vorgesehen, welches beispielhaft eine klassische Filterfunktion oder ebenfalls ein neuronales Netzwerk zur Datenvorverarbeitung umfassen kann. Das Datenvorverarbeitungs-Modul 11 ist dem neuronalen Netzwerk 10 vorgeschaltet und dient zur Filterung der Eingangsdaten, d.h. der Spektren S hinsichtlich zumindest einer Information, insbesondere über das Spektrum S oder den Sensor 1. Beispielsweise handelt es sich bei der Information um einen Resonanzpeak, insbesondere eine Peak-Höhe, eine Peak-Güte, oder eine Frequenz, eine Anzahl an Resonanzpeaks innerhalb eines Spektrums S, oder ein Hintergrundsignal des Spektrums S.

**Bezugszeichenliste**

| | |
|---|---|
| 1 | Vibronischer Sensor |
| 2 | Medium |
| 2a | Behälter |
| 3 | Sensoreinheit |
| 4 | Schwingfähige Einheit |
| 5 | Antriebs-/Empfangseinheit |

| 6 | Elektronikeinheit |
|---|---|
| 7 | Membran |
| 8a,8b | Schwingstäbe |
| 9a,9b | Paddel |
| 10 | neuronales Netzwerk |
| 11 | Datenvorverarbeitungs-Modul |

| $U_A$ | Anregesignal |
|---|---|
| $U_E$ | Empfangssignal |
| F | Frequenz |
| $\Delta\Phi$ | vorgebbare Phasenverschiebung |
| A | Amplitude |
| S | Spektrum |
| Z | Aussage über den Zustand des Sensors |

**Patentansprüche**

1. Verfahren zur Zustandsüberwachung eines vibronischen Sensors (1),

   umfassend eine mechanisch schwingfähige Einheit (4) und eine Antriebs-/Empfangseinheit (5), welche dazu ausgestaltet ist, die mechanisch schwingfähige Einheit (4) mittels eines Anregesignals ($U_A$) zu mechanischen Schwingungen anzuregen und die mechanischen Schwingungen der mechanisch schwingfähigen Einheit (4) zu empfangen und in ein Empfangssignal ($U_E$) umzuwandeln,
   umfassend folgende Verfahrensschritte:

   Aufnehmen zumindest eines Spektrums (S) des vibronischen Sensors (1) als Eingangsdaten,
   Zuführung der Eingangsdaten (S) an ein Datenvorverarbeitungs-Modul (11), welches zumindest einen Filter zur Filterung der Eingangsdaten (S) hinsichtlich zumindest einer Information umfasst,
   Ermitteln einer Aussage (A) über den Zustand des vibronischen Sensors (1) und
   Ausgabe der Aussage (A) über den Zustand des vibronischen Sensors (1),
   **dadurch gekennzeichnet,**
   **dass** das Verfahren folgende Verfahrensschritt umfasst:

   Bereitstellen der gefilterten Eingangsdaten (S) an ein neuronales Netzwerk (10), welches dazu ausgestaltet ist, zumindest anhand der gefilterten Eingangsdaten (S) die Aussage (A) über den Zustand des vibronischen Sensors (1) zu ermitteln,
   wobei es sich bei dem neuronalen Netzwerk (10) um ein rekurrentes neuronales Netzwerk handelt, das dazu ausgestaltet ist, zumindest anhand der Eingangsdaten (S) eine vorausschauende Wartung des vibronischen Sensors (1) durchzuführen, und
   wobei das neuronale Netzwerk (10) dazu ausgestaltet ist, zumindest anhand der Eingangsdaten (S) einen Füllstand eines Mediums (2) in einem Behältnis (2a) zu ermitteln.

2. Verfahren nach Anspruch 1,
   wobei es sich bei dem Spektrum (S) um ein Frequenzspektrum einer Amplitude (A) des Empfangssignals ($U_E$) handelt.

3. Verfahren nach Anspruch 1 oder 2,
   wobei es sich bei der Aussage (Z) über den Zustand des vibronischen Sensors (1) um eine Aussage über zumindest einen Umgebungsparameter oder eine Änderung zumindest eines Umgebungsparameters, um eine Aussage über die Antriebs-/Empfangseinheit (5) oder um eine Aussage über Vibrationen in einer Umgebung des vibronischen Sensors (1) handelt.

4. Verfahren nach einem der Ansprüche 1 bis 3,
   wobei es sich bei dem neuronalen Netzwerk (10) um ein mehrschichtiges neuronales Netzwerk handelt.

5. Verfahren nach einem der Ansprüche 1 bis 4,
   wobei das Datenvorverarbeitungs-Modul (11) ein faltendes neuronales Netzwerk zur Datenvorverarbeitung umfasst.

**Claims**

1.  A method for condition monitoring of a vibronic sensor (1),

    comprising a mechanically oscillatable unit (4) and a drive/receive unit (5) configured to excite the mechanically oscillatable unit (4) to mechanical oscillations by means of an excitation signal ($U_A$) and to receive the mechanical oscillations of the mechanically oscillatable unit (4) and convert them into a receive signal ($U_E$), comprising the following method steps:

    acquiring at least one spectrum (S) of the vibronic sensor (1) as input data,
    supplying the input data (S) to a data preprocessing module (11) comprising at least one filter for filtering the input data (S) with respect to at least one item of information,
    determining a statement (A) regarding the condition of the vibronic sensor (1), and
    outputting the statement (A) regarding the condition of the vibronic sensor (1),
    **characterized in that**
    the method further comprises the following step:

    providing the filtered input data (S) to a neural network (10), which is configured to determine the statement (A) regarding the condition of the vibronic sensor (1) at least based on the filtered input data (S),
    wherein the neural network (10) is a recurrent neural network configured to perform predictive maintenance of the vibronic sensor (1) at least based on the input data (S), and
    wherein the neural network (10) is further configured to determine a fill level of a medium (2) in a container (2a) at least based on the input data (S).

2.  The method according to claim 1,
    wherein the spectrum (S) is a frequency spectrum of an amplitude (A) of the receive signal ($U_E$).

3.  The method according to claim 1 or 2,
    wherein the statement (A) regarding the condition of the vibronic sensor (1) relates to at least one environmental parameter or a change of at least one environmental parameter, or relates to the drive/receive unit (5), or relates to vibrations in an environment of the vibronic sensor (1).

4.  The method according to any one of claims 1 to 3,
    wherein the neural network (10) is a multilayer neural network.

5.  The method according to any one of claims 1 to 4,
    wherein the data preprocessing module (11) comprises a convolutional neural network for data preprocessing.

**Revendications**

1.  Procédé de surveillance d'état d'un capteur vibronique (1),

    comprenant une unité oscillante mécaniquement (4) et une unité d'entraînement/réception (5) configurée pour exciter l'unité oscillante mécaniquement (4) à des oscillations mécaniques au moyen d'un signal d'excitation ($U_A$) et pour recevoir les oscillations mécaniques de l'unité oscillante mécaniquement (4) et les convertir en un signal de réception ($U_E$),
    comprenant les étapes suivantes :

    acquisition d'au moins un spectre (S) du capteur vibronique (1) en tant que données d'entrée,
    fourniture des données d'entrée (S) à un module de prétraitement de données (11) comprenant au moins un filtre pour filtrer les données d'entrée (S) en fonction d'au moins une information,
    détermination d'une information (A) relative à l'état du capteur vibronique (1), et
    sortie de l'information (A) relative à l'état du capteur vibronique (1),
    **caractérisé en ce que**
    le procédé comprend en outre l'étape suivante :

fourniture des données d'entrée filtrées (S) à un réseau neuronal (10), configuré pour déterminer l'information (A) relative à l'état du capteur vibronique (1) au moins sur la base des données d'entrée filtrées (S),

le réseau neuronal (10) étant un réseau neuronal récurrent configuré pour assurer une maintenance prédictive du capteur vibronique (1) au moins sur la base des données d'entrée (S), et

le réseau neuronal (10) étant en outre configuré pour déterminer un niveau de remplissage d'un milieu (2) dans un réservoir (2a) au moins sur la base des données d'entrée (S).

2. Procédé selon la revendication 1,
dans lequel le spectre (S) est un spectre de fréquences d'une amplitude (A) du signal de réception ($U_E$).

3. Procédé selon la revendication 1 ou 2,
dans lequel l'information (A) relative à l'état du capteur vibronique (1) concerne au moins un paramètre environnemental ou une modification d'au moins un paramètre environnemental, ou concerne l'unité d'entraînement/réception (5), ou concerne des vibrations dans un environnement du capteur vibronique (1).

4. Procédé selon l'une quelconque des revendications 1 à 3,
dans lequel le réseau neuronal (10) est un réseau neuronal multicouche.

5. Procédé selon l'une quelconque des revendications 1 à 4,
dans lequel le module de prétraitement de données (11) comprend un réseau neuronal convolutif pour le prétraitement des données.

Fig. 1

Fig. 2

Fig. 3

Fig. 4

Fig. 5

Fig. 6a

Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015121621 B4
- DE 102006034105 A1
- DE 102007013557 A1
- DE 102005015547 A1
- DE 102009026685 A1
- DE 102009028022 A1
- DE 102010030982 A1
- DE 00102010030982 A1
- DE 102012102589 A1
- DE 102016111134 A1

- DE 10050299 A1
- DE 102007043811 A1
- DE 10057974 A1
- DE 102006033819 A1
- DE 102015102834 A1
- DE 102012101667 A1
- DE 102016124740 A1
- EP 1624291 A2
- DE 102017111392 A1